# EUROPEAN PATENT APPLICATION

(11) **EP 4 557 103 A2**
(43) Date of publication of application: **21.05.2025**
(21) Application number: 25166263.1
(22) Date of filing: 26.03.2025
(51) Int. Cl.: G06F 11/263, G06F 11/27

(54) **FUNCTIONAL SAFETY PROTECTION METHOD FOR COMPUTING CIRCUIT AND FUNCTIONAL SAFETY COMPUTING CIRCUIT**

(30) Priority: 29.03.2024 CN 202410382105
(71) Applicant: Chengdu Horizon Journey Technology Co., Ltd., Chengdu, Sichuan 610041 (CN)
(72) Inventor: ZHOU, Tao, Chengdu, 610041 (CN)
(74) Representative: v. Bezold & Partner Patentanwälte - PartG mbB

(57) **Abstract**

Disclosed are a functional safety protection method for a computing circuit and a functional safety computing circuit. The computing circuit includes a computing array with a plurality of compute units. The method includes: generating test data; invoking the compute units to respectively perform computations based on the test data, to obtain first computation results respectively corresponding to the compute units; determining a matching degree between the first computation results respectively corresponding to the compute units; and determining a functional safety detection result of the computing array based on the matching degree. According to embodiments of this disclosure, functional safety abnormalities that occur in the computing circuit can be detected, thereby facilitating protection for the computing circuit.

## Description

### FIELD OF THE INVENTION

This disclosure relates to technologies of chips, and in particular, to a functional safety protection method for a computing circuit and a functional safety computing circuit.

### BACKGROUND OF THE INVENTION

Currently, chips are widely applied. A chip may include a computing circuit. During operation of the chip, there may be functional abnormalities in a computing circuit. To ensure reliability of the computing circuit and even the chip, it is needed to perform functional safety (fusa) detection on the functional abnormalities that occur in the computing circuit.

### SUMMARY OF THE INVENTION

To resolve the foregoing technical problem, this disclosure provides a functional safety protection method for a computing circuit and a functional safety computing circuit.

According to an aspect of an embodiment of this disclosure, a functional safety protection method for a computing circuit is provided, where the computing circuit includes a computing array with a plurality of compute units, and the method includes:
generating test data;
invoking the compute units to respectively perform computations based on the test data, to obtain first computation results respectively corresponding to the compute units;
determining a matching degree between the first computation results respectively corresponding to the compute units; and
determining a functional safety detection result of the computing array based on the matching degree.

According to another aspect of an embodiment of this disclosure, a functional safety computing circuit is provided, including:
a test data generation module, configured to generate test data;
a computing array with a plurality of compute units, wherein the compute units are configured to perform computations based on the test data to obtain first computation results respectively corresponding to the compute units; and
a functional safety protection module, configured to determine a matching degree between the first computation results respectively corresponding to the compute units, and determine a functional safety detection result of the computing array based on the matching degree.

According to still another aspect of an embodiment of this disclosure, a computation system is provided, including:
the functional safety computing circuit that is described above, wherein the computing circuit includes a multiplexer; and
a determining module, configured to determine a current state of a computing array included in the computing circuit, and set the multiplexer included in the computing circuit in a mode that is adaptable to the current state of the computing array.

According to yet another aspect of an embodiment of this disclosure, a computer readable storage medium is provided, wherein the storage medium stores a computer program, and the computer program is used for implementing the functional safety protection method for a computing circuit that is described above.

According to a still yet another aspect of an embodiment of this disclosure, an electronic device is provided, where the electronic device includes:
a processor; and
a memory, configured to store processor-executable instructions, wherein
the processor is configured to read the executable instructions from the memory, and execute the instructions to implement the functional safety protection method for a computing circuit that is described above.

According to a further aspect of an embodiment of this disclosure, a computer program product is provided. When instructions in the computer program product are executed by a processor, the functional safety protection method for a computing circuit described above is implemented.

Based on the functional safety protection method for a computing circuit, the functional safety computing circuit, the computation system, the storage medium, the electronic device, and the program product that are provided in the foregoing embodiments of this disclosure, the compute units in the computing array may be invoked to perform computations based on the test data to obtain the first computation results respectively corresponding to the compute units. Because the compute units use the same test data, the first computation results respectively corresponding to the compute units theoretically need to be consistent. Whether the first computation results respectively corresponding to the compute units are actually consistent may be verified based on the matching degree between the first computation results respectively corresponding to the compute units. Whether the computing array has a functional safety abnormality may be determined based on whether a theoretical situation matches an actual situation. Thus, the corresponding functional safety detection result may be obtained. For example, if the theoretical situation does not match the actual situation, it may be determined that the computing array has a functional safety abnormality. Therefore, according to the embodiments of this disclosure, the functional safety abnormality that occurs in the computing circuit can be detected, thereby facilitating protection for the computing circuit.

### BRIEF DESCRIPTION OF THE DRAWINGS

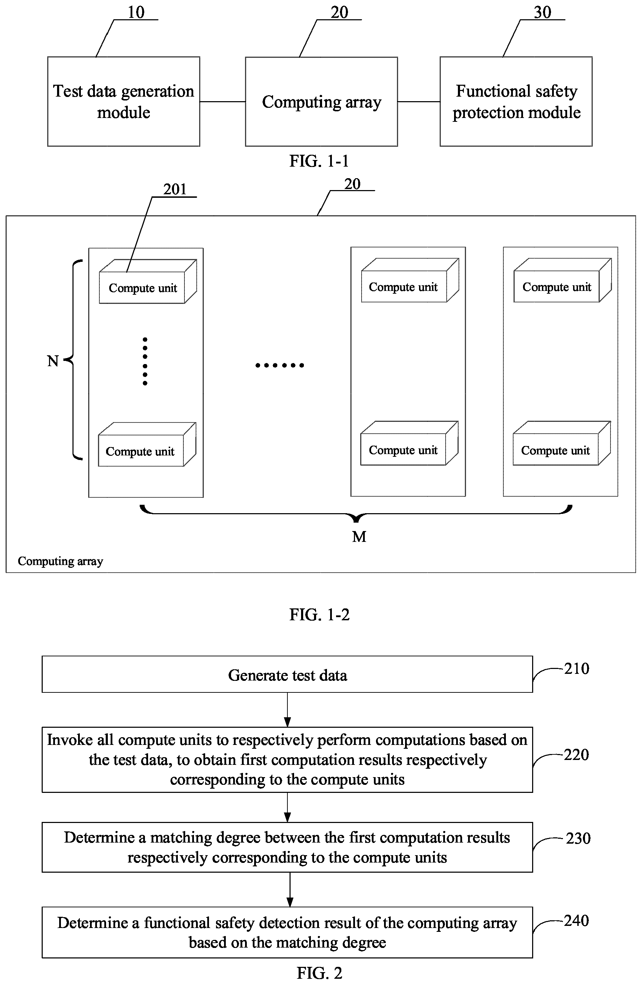

FIG. 1-1 is a schematic diagram of a structure of a functional safety computing circuit according to some exemplary embodiments of this disclosure;
FIG. 1-2 is a schematic diagram of a structure of a computing array according to some exemplary embodiments of this disclosure;
FIG. 2 is a schematic flowchart of a functional safety protection method for a computing circuit according to some exemplary embodiments of this disclosure;
FIG. 3 is a schematic flowchart of a manner for obtaining a first computation result according to some exemplary embodiments of this disclosure;
FIG. 4 is a schematic flowchart of a mode setting method for a multiplexer according to some exemplary embodiments of this disclosure;
FIG. 5 is a schematic flowchart of a manner for obtaining and outputting a second computation result according to some exemplary embodiments of this disclosure;
FIG. 6 is a schematic flowchart of a mode setting method for a multiplexer according to some other exemplary embodiments of this disclosure;
FIG. 7 is a schematic flowchart of a data layout conversion method according to some exemplary embodiments of this disclosure;
FIG. 8 is a schematic flowchart of a data layout conversion method according to some other exemplary embodiments of this disclosure;
FIG. 9 is a schematic diagram of a structure of a functional safety computing circuit according to some other exemplary embodiments of this disclosure;
FIG. 10 is a schematic diagram of a structure of a functional safety protection module according to some exemplary embodiments of this disclosure; and
FIG. 11 is a diagram of a structure of an electronic device according to some exemplary embodiment of this disclosure.

### DETAILED DESCRIPTION OF THE EMBODIMENTS

To explain this disclosure, exemplary embodiments of this disclosure are described below in detail with reference to accompanying drawings. Obviously, the described embodiments are merely a part, rather than all of embodiments of this disclosure. It should be understood that this disclosure is not limited by the exemplary embodiments.

It should be noted that unless otherwise specified, the scope of this disclosure is not limited by relative arrangement, numeric expressions, and numerical values of components and steps described in these embodiments.

### Application overview

A chip may include a computing circuit. For example, the chip may include a computing circuit for implementing convolution operations, a computing circuit for implementing pooling operations, and the like.

During operation of the chip, due to factors such as process and environment, the computing circuit may have a functional abnormality. For example, if there is electromagnetic interference in an environment, a functional abnormality may occur in the computing circuit. If the functional abnormality in the computing circuit cannot be detected in a timely manner, adverse effects may be brought to reliability of the computing circuit and even the chip. Therefore, it is necessary to take certain measures to perform functional safety detection on the functional abnormality that occurs in the computing circuit.

### Exemplary system

In an embodiment of this disclosure, as shown in FIG. 1-1, a computing circuit may include a test data generation module 10, a computing array 20, and a functional safety protection module 30. The test data generation module 10 may generate test data. As shown in FIG. 1-2, the computing array 20 may include a plurality of compute units 201. The compute units 201 in the computing array 20 may be configured to perform computations based on the test data to obtain corresponding first computation results. The functional safety protection module 30 may determine a functional safety detection result of the computing array 20 based on the first computation results respectively corresponding to the compute units 201. In this way, functional safety abnormalities that occur in the computing circuit may be detected through collaborative work of the test data generation module 10, the computing array 20, and the functional safety protection module 30, thereby facilitating functional safety protection for the computing circuit.

Optionally, the computing circuit may further include a data obtaining module and a multiplexer. In some operating modes of the multiplexer, the multiplexer may connect the test data generation module 10 and the computing array 20, so that the test data generated by the test data generation module 10 can be transmitted to the computing array 20. In some other operating modes of the multiplexer, the multiplexer may connect the data obtaining module and the computing array 20, so that actual to-be-computed data obtained by the data obtaining module can be transmitted to the computing array 20.

### Exemplary method

An embodiment of this disclosure provides a functional safety protection method for a computing circuit.

Optionally, a type of operations to be implemented by the computing circuit may be referred to as target operations. Target operations may include but is not limited to a convolution operation, a pooling operation, a tensor computation, and the like.

Optionally, the computing circuit may include a computing array, which may be configured to perform the target operation. The computing array may be a core component of the computing circuit, and detection for a functional safety abnormality in the computing circuit may be understood as detection for a functional safety abnormality in the computing array.

Optionally, the computing array may include a plurality of compute units. For example, the computing circuit may include N rows and M columns of compute units. Values of N and M may be same or different. The compute units in the computing array may perform the target operation.

As shown in FIG. 2, the functional safety protection method for a computing circuit may include steps 210, 220, 230, and 240.

### Step 210. Generate test data.

Taking a case where the target operation is a convolution operation as an example, the test data may include tensor data and weight data. The tensor data may be image data or a feature map. The weight data may be a convolution kernel. Taking a case where the target operation is a max pooling operation or an average pooling operation as an example, the test data may include tensor data and a size of a pooling window.

Step 220. Invoke all compute units to respectively perform computations based on the test data, to obtain first computation results respectively corresponding to the compute units.

Taking the case where the test data includes the tensor data and the weight data as an example, any compute unit may be invoked to use the weight data in the test data to perform convolution operations on the tensor data in the test data, so as to obtain a corresponding convolutional computation result. The convolutional computation result may be used as the first computation result corresponding to this compute unit.

Similarly, for the case where the test data includes the tensor data and the size of the pooling window, for any compute unit, pooling operations may be performed to obtain a corresponding pooling computation result, which may be used as the first computation result corresponding to this compute unit.

Step 230. Determine a matching degree between the first computation results respectively corresponding to the compute units.

Optionally, if two first computation results are the same, it may be determined that a matching degree between the two first computation results is 1. If two first computation results are different, it may be determined that a matching degree between the two first computation results is 0.

Step 240. Determine a functional safety detection result of the computing array based on the matching degree.

Optionally, by performing step 230, the matching degree between any two first computation results may be determined. The functional safety detection result of the computing array may be determined based on these determined matching degrees. For example, if at least one of these matching degrees is 0, a functional safety detection result used for representing a functional abnormality in the computing array may be obtained. For another example, if all the matching degrees are 1, a functional safety detection result used for representing absence of a functional abnormality in the computing array may be obtained.

Optionally, when the computing array has a functional abnormality, functional safety alarm information may be reported to a central processing unit (CPU). Assuming that a chip where the computing circuit is located is an autonomous driving chip, the autonomous driving chip operates in an autonomous driving mode of a vehicle. After receiving the functional safety alarm information, the central processing unit may control the vehicle to exit the autonomous driving mode.

In this embodiment of this disclosure, all the compute units in the computing array may be invoked to perform computations based on the test data, so as to obtain the first computation results respectively corresponding to the compute units. Because the compute units use the same test data for computation, the first computation results respectively corresponding to the compute units theoretically need to be consistent. Whether the first computation results respectively corresponding to the compute units are actually consistent may be verified based on the matching degree between the first computation results respectively corresponding to the compute units. Whether the computing array has a functional safety abnormality may be determined based on whether a theoretical situation matches an actual situation. Thus, the corresponding functional safety detection result may be obtained. For example, if the theoretical situation does not match the actual situation, it may be determined that the computing array has a functional safety abnormality. Therefore, according to the embodiments of this disclosure, the functional safety abnormality that occurs in the computing circuit can be detected, thereby facilitating protection for the computing circuit.

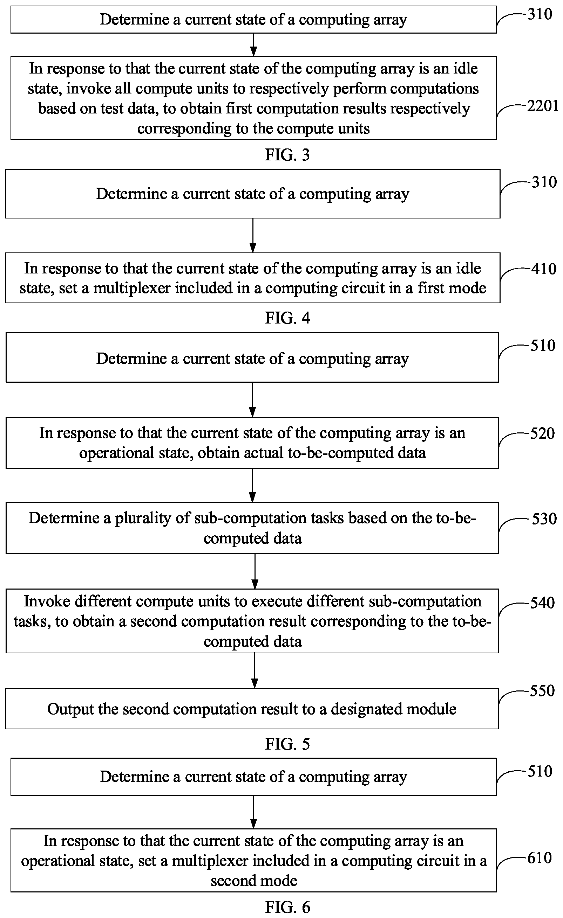

In some optional examples, as shown in FIG. 3, the method provided in the embodiments of this disclosure may further include step 310.

Step 310. Determine a current state of the computing array.

Optionally, a determining module may be disposed in this embodiment of this disclosure, and the current state of the computing array may be determined by using the determining module. For example, a compiler may run on the determining module, and the compiler may be configured to allocate a computation task to the computing circuit. If the compiler currently allocates a computation task to the computing circuit, it may be determined that the current state of the computing array is an operational state. In other words, the computing array currently has a real computation task that needs to be executed. If the compiler currently does not allocate a computation task to the computing circuit, it may be determined that the current state of the computing array is an idle state. In other words, the computing array currently has no real computation task that needs to be executed, and is in an intermission period of normal computations.

Step 220 may include step 2201.

Step 2201. In response to that the current state of the computing array is an idle state, invoke all compute units to respectively perform computations based on the test data, to obtain the first computation results respectively corresponding to the compute units.

In some optional implementations of this disclosure, as shown in FIG. 4, the method provided in this embodiment of this disclosure may further include step 410. Optionally, step 410 may be performed after step 310.

Step 410. In response to that the current state of the computing array is the idle state, set a multiplier included in the computing circuit in a first mode.

In the first mode, the multiplexer connects a test data generation module that is configured to generate the test data and the computing array in the computing circuit, so that the test data generation module transmits the test data to the computing array, and each compute unit performs respective computations based on the test data.

Optionally, the computing circuit may include the multiplexer, which may also be referred to as MUX. The multiplexer may be configured to include multiple modes. The plurality of modes may include the first mode. In the first mode, the multiplexer may connect the test data generation module and the computing array. In another mode except the first mode among the plurality of modes, the multiplexer may disconnect the test data generation module from the computing array.

Optionally, when the current state of the computing array is the idle state, the multiplexer may be set in the first mode. In the first mode, the multiplexer connects the test data generation module and the computing array, and the test data generated by the test data generation module may be transmitted to the computing array through the multiplexer. Therefore, each compute unit in the computing array may obtain the test data for computation. Based on this, the functional safety protection module can determine whether the computing circuit has a functional safety abnormality.

In the implementation shown in FIG. 4, when the current state of the computing array is the idle state, the test data generation module and the computing array may be connected by controlling the mode of the multiplexer, so that the test data generated by the test data generation module is provided to the computing array. In this way, during the intermission period of normal computations of the computing array, whether the computing circuit has a functional abnormality may be determined through testing, which is beneficial for avoiding impact of the testing process on normal operation of the computing circuit.

In some embodiments, the multiplexer may not be disposed, but the test data generated by the test data generation module is directly transmitted to the computing array. Moreover, when the current state of the computing array is the idle state, a trigger signal may be provided to the computing array through the compiler, to trigger each compute unit in the computing array to perform computations based on the test data.

In the embodiment shown in FIG. 3, the intermission period of normal computations of the computing array may be used to perform functional safety detection on the computing circuit, which is beneficial for ensuring normal operation of the computing circuit.

In some optional examples, as shown in FIG. 5, the method provided in the embodiments of this disclosure may further include steps 510, 520, 530, 540, and 550.

Step 510. Determine a current state of the computing array.

It should be noted that, for specific implementation of step 510, reference may be made to the foregoing relevant description of the specific implementation of step 310, and details are not described herein.

Step 520. In response to that the current state of the computing array is an operational state, obtain actual to-be-computed data.

Optionally, the actual to-be-computed data may be obtained when the current state of the computing array is the operational state. For example, to-be-computed data may be determined from a real data source.

Optionally, the real data source may be located inside the chip where the computing circuit is located. For example, the chip where the computing circuit is located may include a double data rate synchronous dynamic random access memory (DDR SDRAM), which may also be referred to as DDR for short. The DDR may serve as the real data source. For another example, the chip where the computing circuit is located may include a cache memory, which may serve as the real data source. Certainly, the real data source may also be located outside the chip where the computing circuit is located. This is not limited in this disclosure.

Optionally, for composition of the to-be-computed data, reference may be made to the foregoing relevant description of the composition of the test data, and details are not described herein.

Step 530. Determine a plurality of sub-computation tasks based on the to-be-computed data.

Optionally, N * M sub-computation tasks may be determined based on the to-be-computed data. For example, the to-be-computed data may include tensor data and weight data. If the tensor data is image data, the image data may be split into N * M sub-image data, which may correspond to N * M sub-computation tasks. The N * M sub-image data may be in one-to-one correspondence to the N * M sub-computation tasks.

Step 540. Invoke different compute units to execute different sub-computation tasks, to obtain a second computation result corresponding to the to-be-computed data.

Optionally, the N * M sub-computation tasks determined in step 530 may be allocated to the N * M compute units in one-to-one correspondence, and the N * M compute units may be invoked to execute the corresponding sub-computation tasks to obtain corresponding computation results. In this way, the computation results respectively corresponding to the N * M compute units may be obtained. The second computation result corresponding to the to-be-computed data may be obtained by combining the computation results respectively corresponding to the N * M compute units.

In an example, the to-be-computed data may include tensor data and weight data. If the tensor data is image data and values of both N and M are 4, the image data may be evenly split into 16 sub-images, which may correspond to 16 sub-computation tasks. A first compute unit among 16 compute units may use the weight data in the to-be-computed data to perform a convolution operation on sub-image data corresponding to a first sub-computation task, a second compute unit among the 16 compute units may use the weight data in the to-be-computed data to perform a convolution operation on sub-image data corresponding to a second sub-computation task, ..., and a sixteenth compute unit among the 16 compute units may use the weight data in the to-be-computed data to perform a convolution operation on sub-image data corresponding to a sixteenth sub-computation task. In this way, computation results respectively corresponding to the 16 compute units may be obtained, and the second computation result may be obtained by combining these computation results. The second computation result may be a feature map.

Step 550. Output the second computation result to a designated module.

Optionally, the designated module may be a memory that stores the second computation result. In an example, the designated module and the real data source described above may be a same memory.

Optionally, there may be some post-processing modules in the chip where the computing circuit is located. The post-processing modules may obtain the second computation result from the designated module and perform further computations on the second computation result. For example, the post-processing module may perform a pooling operation and a rectified linear unit(ReLU)-based operation on the second computation result.

In the embodiments of this disclosure, in the operational state of the computing array, a computation task for the to-be-computed data may be split into a plurality of sub-computation tasks, and different sub-computation tasks may be executed by using different compute units. In this way, different compute units may perform target operations concurrently, which is beneficial for improving execution efficiency of the computation task for the to-be-computed data.

In some optional examples, as shown in FIG. 6, the method provided in the embodiments of this disclosure may further include step 610. Optionally, step 610 may be performed after step 510.

Step 610. In response to that the current state of the computing array is the operational state, set a multiplexer included in the computing circuit in a second mode.

In the second mode, the multiplexer connects a data obtaining module that is configured to obtain the to-be-computed data and the computing array in the computing circuit, so that the data obtaining module transmits the to-be-computed data to the computing array, and different compute units execute different sub-computation tasks.

As described above, the computing circuit may include a multiplexer, which may be configured in multiple modes. In addition to the first mode, the plurality of modes may also include the second mode. In the second mode, the multiplexer may connect the data obtaining module and the computing array. In the second mode, the multiplexer may also disconnect the test data generation module from the computing array.

In the embodiments of this disclosure, when the current state of the computing array is the operational state, the data obtaining module and the computing array may be connected by controlling the mode of the multiplexer, so that the to-be-computed data obtained by the data obtaining module is provided to the computing array. In this way, the compute units in the computing array may execute corresponding sub-computation tasks, respectively. On this basis, the computation task for the to-be-computed data may be executed normally. In other words, the computing circuit in the embodiments of this disclosure can not only meet normal computation requirements, but also meet testing requirements (detecting the functional safety abnormalities through testing).

In some optional examples, step 230 may include:
determining a computation result set based on the first computation results respectively corresponding to the compute units;
determining, based on the computation result set, a first sequence that includes at least two first computation results arranged in sequence and a second sequence that includes at least two other first computation results arranged in sequence; and
determining the matching degree between the first computation results with consistent corresponding ordinal positions in the first sequence and the second sequence.

Optionally, a set of first computation results corresponding to each compute unit may be used as a computation result set. Subsequently, the computation result set may be divided into two parts, each of which includes at least two first computation results. The first sequence may be formed by arranging the at least two first computation results in one part in sequence. The second sequence may be formed by arranging the at least two first computation results in the other part in sequence. A quantity of the first computation results in the first sequence may be same as or different from that in the second sequence.

In the embodiments of this disclosure, whether the first computation result ranked first in the first sequence is same as the first computation result ranked first in the second sequence may be compared, so as to obtain a corresponding matching degree. Similarly, whether the first computation result ranked second in the first sequence is same as the first computation result ranked second in the second sequence may also be compared, so as to obtain a corresponding matching degree. Similarly, whether the first computation result ranked third in the first sequence is same as the first computation result ranked third in the second sequence may also be compared, so as to obtain a corresponding matching degree. The others may be obtained by analogy, and details are not described herein. If at least one matching degree among the various determined matching degrees is 0, a functional safety detection result used for representing a functional safety abnormality in the computing circuit may be obtained. If all the determined matching degrees are 1, a functional safety detection result used for representing absence of a functional safety abnormality in the computing circuit may be obtained.

In an example, both the first sequence and the second sequence include 20 first computation results, and the 20 first computation results in the first sequence and the 20 first computation results in the second sequence may form 20 result pairs. For example, a first result pair may include the first computation result ranked first in the first sequence and the first computation result ranked first in the second sequence; and a second result pair may include the first computation result ranked second in the first sequence and the first computation result ranked second in the second sequence. The others may be obtained by analogy, and details are not described herein. Herein, two first computation results in the first result pair may be compared to obtain a corresponding matching degree, and two first computation results in the second result pair may also be compared to obtain a corresponding matching degree. The others may be obtained by analogy, and details are not described herein. In this way, 20 matching degrees may be obtained. If at least one of the 20 matching degrees is 0, a functional safety detection result used for representing a functional abnormality in the computing array may be obtained. If all the 20 matching degrees are 1, a functional safety detection result used for representing absence of a functional abnormality in the computing array may be obtained.

In the embodiments of this disclosure, the first sequence and the second sequence may be obtained based on the first computation results respectively corresponding to the compute units, and the first computation results with the consistent corresponding ordinal positions in the first sequence and the second sequence may be compared to determine the corresponding matching degrees, without comparing the first computation results respectively corresponding to the compute units pairwise. This is beneficial for reducing computation load required for detecting the functional safety abnormalities, thereby helping to save resources and power consumption.

In some optional examples, there are a plurality of test data, and each piece of the test data includes tensor data and weight data. Any two the test data satisfy at least one of the following items:
the tensor data included in one piece of the test data is different from that included in another piece of the test data; and
the weight data included in one piece of the test data is different from that included in another piece of the test data.

Optionally, there may be 2, 3, 5, 10, 15, or 20 test data, which is not enumerated herein.

In an example, after it is determined that the current state of the computing array is the idle state, test data 1 may be generated at a time point t1. The test data 1 may be transmitted to the computing array, which may invoke the N * M compute units to respectively perform computations based on the test data 1. Based on this, a first set of matching degrees may be obtained. In addition, test data 2 different from the test data 1 may also be generated at a time point t2 (the time point t2 is later than the time point t1). The test data 2 may be transmitted to the computing array, which may invoke the N * M compute units to respectively perform computations based on the test data 2. Based on this, a second set of matching degrees may be obtained. Similarly, test data 3 different from the test data 1 and the test data 2 may also be generated at a time point t3 (the time point t3 is later than the time point t2). The test data 3 may be transmitted to the computing array, which may invoke the N * M compute units to respectively perform computations based on the test data 3. Based on this, a third set of matching degrees may be obtained. If at least one matching degree in the first, the second, and the third sets of matching degrees is 0, a functional safety detection result used for representing a functional safety abnormality in the computing array may be obtained. If all matching degrees in the first, the second, and the third sets of matching degrees are 1, a functional safety detection result used for representing absence of a functional safety abnormality in the computing array may be obtained.

In the embodiments of this disclosure, there are differences between any two test data. By using these test data for testing, computation logic can be flipped as much as possible, so that the computing array may be tested more comprehensively, thereby ensuring accuracy and reliability of a finally obtained functional safety detection result.

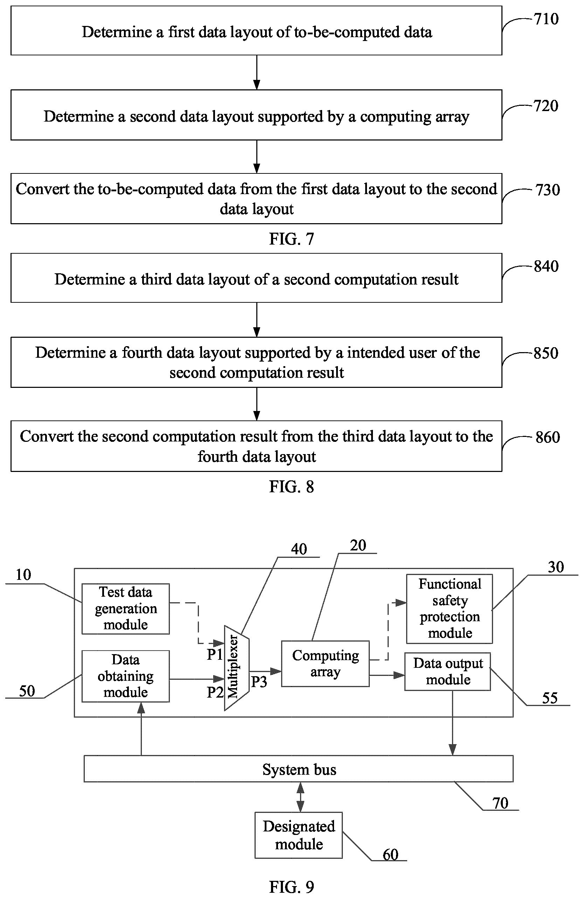

In some optional examples, before step 530 in this disclosure, as shown in FIG. 7, the method provided in the embodiments of this disclosure may further include steps 710, 720, and 730.

Step 710. Determine a first data layout of the to-be-computed data.

Step 720. Determine a second data layout supported by the computing array.

Step 730. Convert the to-be-computed data from the first data layout to the second data layout.

Optionally, the first data layout of the to-be-computed data may refer to a data layout of the tensor data in the to-be computed data in the real data source. The second data layout supported by the computing array may be a data layout specified for the tensor data in the input of the computing array. The data layout may also be referred to as Layout. The data layout may be characterized by the size in each dimension of the tensor data. For example, if the data layout is 4h4w16c, it indicates that the tensor data has a size of 4 in a height dimension, a size of 4 in a width dimension, and a size of 16 in a channel dimension. For another example, if the data layout is 2h16w8c, it indicates that the tensor data has a size of 2 in the height dimension, a size of 16 in the width dimension, and a size of 8 in the channel dimension.

In the embodiments of this disclosure, after the first data layout of the to-be-computed data and the second data layout supported by the computing array are determined, it may be determined whether the first data layout is same as the second data layout. If the first data layout is same as the second data layout, there is no need to convert the data layout. If the first data layout is different from the second data layout, the to-be-computed data may be converted from the first data layout to the second data layout through data transfer. For example, the tensor data in the to-be-computed data may be converted from the first data layout to the second data layout. The data migration may also be understood as data reordering. In this way, the tensor data in the to-be-computed data obtained by the computing array may be presented in the second data layout that is consistent with the data layout supported by the computing array. This is beneficial for ensuring correct processing of the to-be-computed data by the computing array.

In some optional examples, before step 550 in this disclosure, as shown in FIG. 8, the method provided in the embodiments of this disclosure may further include steps 840, 850, and 860.

Step 840. Determine a third data layout of the second computation result.

Step 850. Determine a fourth data layout supported by a intended user of the second computation result.

Step 860. Convert the second computation result from the third data layout to the fourth data layout.

Optionally, the third data layout of the second computation result may refer to a data layout of the second computation result in the computing array. The intended user of the second computation result may be the post-processing module described above. The fourth data layout supported by the intended user of the second computation result may be a data layout specified for input of the intended user of the second computation result.

In the embodiments of this disclosure, after the third data layout of the second computation result and the fourth data layout supported by the intended user of the second computation result are determined, it may be determined whether the third data layout is same as the fourth data layout. If the third data layout is same as the fourth data layout, there is no need to convert the data layout. If the third data layout is different from the fourth data layout, the second computation result may be converted from the third data layout to the fourth data layout through data migration. In this way, the second computation result that is subsequently output to the designated module is presented in the fourth data layout that is consistent with the data layout supported by the intended user of the second computation result. This is beneficial for ensuring normal processing for the second computation result by the intended user of the second computation result.

In view of the above, according to the embodiments of this disclosure, functional safety abnormalities that occur in the computing circuit may be detected by using the intermission period of normal computations of the computing array through a relatively simple circuit structure at relatively low costs, thereby facilitating real-time protection for the computing circuit.

### Exemplary computing circuit

An embodiment of this disclosure provides a functional safety computing circuit. The functional safety computing circuit may be an important component of a chip, and may also be referred to as a computing circuit for short below.

As shown in FIG. 1 and FIG. 9, the computing circuit may include a test data generation module 10, a computing array 20, and a functional safety protection module 30.

The test data generation module 10 is configured to generate test data.

The computing array 20 has a plurality of compute units 201, and the compute units 201 are configured to perform computations based on the test data to obtain first computation results respectively corresponding to the compute units 201.

The functional safety protection module 30 is configured to determine a matching degree between the first computation results respectively corresponding to the compute units 201, and determine a functional safety detection result of the computing array 20 based on the matching degree.

Optionally, the computing array 20 may be configured to perform a target operation, and may be a core component of the computing circuit. Detection for a functional safety abnormality in the computing circuit may be understood as detection for a functional safety abnormality in the computing array 20. The test data generation module 10 and the functional safety protection module 30 may be modules introduced to assist in functional safety detection of functional abnormalities that occur in the computing circuit.

Optionally, for composition of the test data, reference may be made to the foregoing relevant description, and details are not described herein.

In this embodiment of this disclosure, the test data generation module 10 may be electrically connected to the computing array 20. Through the electrical connection between the test data generation module 10 and the computing array 20, the test data generation module 10 may transmit the test data to the computing array 20. All the compute units 201 in the computing array 20 may perform computations based on the test data, so that the first computation results respectively corresponding to the compute units 201 may be obtained.

In addition, the functional safety protection module 30 may also be electrically connected to the computing array 20. Through the electrical connection between the functional safety protection module 30 and the computing array 20, the computing array 20 may transmit the first computation results respectively corresponding to the compute units 201 to the functional safety protection module 30. For example, the computing array 20 may transmit the first computation results respectively corresponding to the compute units 201 to the functional safety protection module 30 in batches. The functional safety protection module 30 may determine the matching degree between the first computation results respectively corresponding to the compute units 201. For example, if two first computation results are the same, it may be determined that a matching degree between the two first computation results is 1. For another example, if two first computation results are different, it may be determined that a matching degree between the two first computation results is 0.

The functional safety protection module 30 may determine the matching degree between any two first computation results. The functional safety protection module 30 may determine the functional safety detection result of the computing array 20 based on these determined matching degrees. For example, if at least one of these matching degrees is 0, a functional safety detection result used for representing a functional abnormality in the computing array 20 may be obtained. For another example, if all the matching degrees are 1, a functional safety detection result used for representing absence of a functional abnormality in the computing array 20 may be obtained.

Optionally, when the computing array 20 has a functional abnormality, the functional safety protection module 30 may report functional safety alarm information to a central processing unit.

In this embodiment of this disclosure, the compute units 201 in the computing array 20 may perform computations based on the test data generated by the test data generation module 10, so as to obtain the first computation results respectively corresponding to the compute units 201. Because the compute units 201 use the same test data, the first computation results respectively corresponding to the compute units 201 theoretically need to be consistent. The functional safety protection module 30 may verify whether the first computation results respectively corresponding to the compute units 201 are actually consistent based on the matching degree between the first computation results respectively corresponding to the compute units 201. Whether the computing array 20 has a functional safety abnormality may be determined based on whether a theoretical situation matches an actual situation. Thus, the corresponding functional safety detection result may be obtained. For example, if the theoretical situation does not match the actual situation, it may be determined that the computing array 20 has a functional safety abnormality. Therefore, according to this embodiment of this disclosure, through collaborative work of the test data generation module 10, the computing array 20, and the functional safety protection module 30, functional abnormalities that occur in the computing circuit can be detected with a relatively simple circuit structure at relatively low costs, thereby facilitating functional safety protection for the computing circuit.

In some optional examples, as shown in FIG. 9, the computing circuit may also include a multiplexer 40.

In response to that a current state of the computing array 20 is an idle state, the multiplexer 40 is set in a first mode. In the first mode, the multiplexer 40 connects the test data generation module 10 and the computing array 20.

The computing array 20 is further configured to obtain the test data from the test data generation module 10, and each compute unit 201 in the computing array 20 performs computations based on the test data.

Optionally, the multiplexer 40 may be configured to include multiple modes. The plurality of modes may include the first mode. In the first mode, the multiplexer 40 may connect the test data generation module 10 and the computing array 20. In another mode except the first mode among the plurality of modes, the multiplexer 40 may disconnect the test data generation module 10 from the computing array 20.

Optionally, the current state of the computing array 20 may be determined by using the determining module described above.

Optionally, the determining module may be electrically connected to the multiplexer 40. When the current state of the computing array 20 is the idle state, the determining module may send a control signal to the multiplexer 40 through the electrical connection between the determining module and the multiplexer 40, so as to set the multiplex 40 in the first mode. In the first mode, the multiplexer 40 connects the test data generation module 10 and the computing array 20, and the test data generated by the test data generation module 10 may be transmitted to the computing array 20 through the multiplexer 40. Therefore, each compute unit 201 in the computing array 20 may obtain the test data for computation. Based on this, the functional safety protection module 30 can determine whether the computing circuit has a functional safety abnormality.

In this embodiment of this disclosure, when the current state of the computing array 20 is the idle state, the test data generation module 10 and the computing array 20 may be connected by controlling the mode of the multiplexer 40, so that the test data generated by the test data generation module 10 is provided to the computing array 20. In this way, during an intermission period of normal computations of the computing array 20, whether the computing circuit has a functional abnormality may be determined through testing, which is beneficial for avoiding impact of the testing process on normal operation of the computing circuit.

In some optional examples, as shown in FIG. 9, the computing circuit may further includes a data obtaining module 50 and a data output module 55.

The data obtaining module 50 is configured to obtain actual to-be-computed data in response to that the current state of the computing array 20 is an operational state.

The computing array 20 is further configured to determine a plurality of sub-computation tasks based on the to-be-computed data, and invoke different compute units 201 to execute different sub-computation tasks, to obtain a second computation result corresponding to the to-be-computed data.

The data output module 55 is configured to output the second computation result to a designated module 60.

Optionally, the data obtaining module 50 and the data output module 55 may be modules used to support the normal operation of the computation module 20.

As described above, the current state of the computing array 20 may be determined by using the determining module. The data obtaining module 50 may obtain the actual to-be-computed data when the current state of the computing array 20 is the operational state. For example, the data obtaining module 50 may obtain the to-be-computed data from a real data source.

It should be noted that, for a type of the real data source and composition of the to-be-computed data, reference may be made to the foregoing relevant description, and details are not described herein.

In this embodiment of this disclosure, the data obtaining module 50 may be electrically connected to the computing array 20. Through the electrical connection between the data obtaining module 50 and the computing array 20, the data obtaining module 50 may transmit the to-be-computed data to the computing array 20. The computing array 20 may determine N * M sub-computation tasks based on the to-be-computed data. The computing array 20 may allocate the N * M sub-computation tasks to N * M compute units 201 in one-to-one correspondence, and invoke the N * M compute units 201 to respectively execute the corresponding sub-computation tasks to obtain corresponding computation results. In this way, the computation results respectively corresponding to the N * M compute units 201 may be obtained. The second computation result corresponding to the to-be-computed data may be obtained by combining the computation results respectively corresponding to the N * M compute units 201.

In addition, the data output module 55 may also be electrically connected to the computing array 20. Through the electrical connection between the data output module 55 and the computing array 20, the computing array 20 may transmit the second computation result to the data output module 55.

Optionally, the data output module 55 may be electrically connected to the designated module 60 through a system bus 70. The data output module 55 may output the second computation result to the designated module 60 through the system bus 70. The designated module 60 may be a memory, and may store the second computation result. In an example, the designated module 60 and the real data source described above may be a same memory. In this way, the data obtaining module 50 may obtain the to-be-computed data from the designated module 60 through the system bus 70.

In this embodiment of this disclosure, in the operational state of the computing array 20, a computation task for the to-be-computed data may be split into a plurality of sub-computation tasks, and different sub-computation tasks may be executed by using different compute units 201. In this way, different compute units 201 may execute target operations concurrently, which is beneficial for improving execution efficiency of the computation task for the to-be-computed data.

In some optional examples, as shown in FIG. 9, the computing circuit may also include a multiplexer 40.

In response to that the current state of the computing array 20 is the operational state, the multiplexer 40 is set in a second mode. In the second mode, the multiplexer 40 connects the data obtaining module 50 and the computing array 20.

The computing array 20 is further configured to obtain the to-be-computed data from the data obtaining module 50, and the compute units 201 in the computing array 20 execute different sub-computation tasks.

As described above, the multiplexer 40 may be configured in a plurality of modes. In addition to the first mode, the plurality of modes may also include the second mode. In the second mode, the multiplexer 40 may connect the data obtaining module 50 and the computing array 20. In the second mode, the multiplexer 40 may also disconnect the test data generation module 10 from the computing array 20.

In an example, as shown in FIG. 9, the multiplexer 40 may include a first input terminal P1, a second input terminal P2, and an output terminal P3. The first input terminal P1 may be electrically connected to the test data generation module 10. The second input terminal P2 may be electrically connected to the data obtaining module 50. The output terminal P3 may be electrically connected to the computing array 20. When the current state of the computing array 20 is the idle state, the determining module may send a control signal to the multiplexer 40 to enable the multiplexer 40 to connect the first input terminal P1 and the output terminal P3, so that the multiplexer 40 is set in the first mode. When the current state of the computing array 20 is the operational state, the determining module may send a control signal to the multiplexer 40 to enable the multiplexer 40 to connect the second input terminal P2 and the output terminal P3, so that the multiplexer 40 is set in the second mode.

In this embodiment of this disclosure, when the current state of the computing array 20 is the operational state, the data obtaining module 50 and the computing array 20 may be connected by controlling the mode of the multiplexer 40, so that the to-be-computed data obtained by the data obtaining module 50 is provided to the computing array 20. In this way, the compute units 201 in the computing array 20 may execute corresponding sub-computation tasks, respectively. On this basis, the computation task for the to-be-computed data may be executed normally. In other words, the computing circuit in this embodiment of this disclosure can not only meet normal computation requirements, but also meet testing requirements.

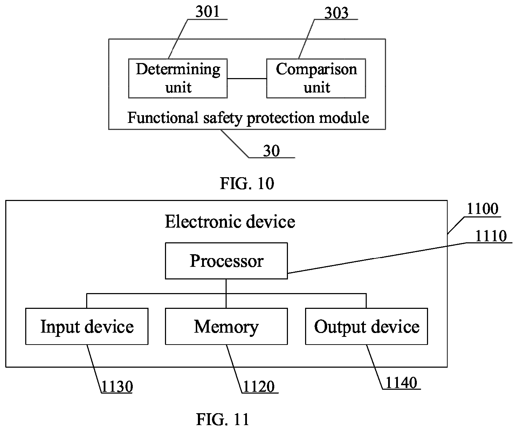

In some optional examples, as shown in FIG. 10, the functional safety protection module 30 may include a determining unit 301 and a comparison unit 303.

The determining unit 301 is configured to determine a computation result set based on the first computation results respectively corresponding to the compute units 201; and determine, based on the computation result set, a first sequence that includes at least two first computation results arranged in sequence and a second sequence that includes at least two other first computation results arranged in sequence.

The comparison unit 303 is configured to determine the matching degree between the first computation results with consistent corresponding ordinal positions in the first sequence and the second sequence.

Optionally, the determining unit 301 may use a set of first computation results corresponding to each compute unit 201 as a computation result set. Subsequently, the determining unit 301 may divide the computation result set into two parts, each of which includes at least two first computation results. The first sequence may be formed by arranging the at least two first computation results in one part in sequence. The second sequence may be formed by arranging the at least two first computation results in the other part in sequence. A quantity of the first computation results in the first sequence may be same as or different from that in the second sequence.

In this embodiment of this disclosure, the comparison unit 303 may be electrically connected to the determining unit 301. Through the electrical connection between the comparison unit 303 and the determining unit 301, the determining unit 301 may transmit both the first sequence and the second sequence to the comparison unit 303. The comparison unit 303 may compare whether the first computation result ranked first in the first sequence is same as the first computation result ranked first in the second sequence, so as to obtain a corresponding matching degree. The comparison unit 303 may also compare whether the first computation result ranked second in the first sequence is same as the first computation result ranked second in the second sequence, so as to obtain a corresponding matching degree. The comparison unit 303 may also compare whether the first computation result ranked third in the first sequence is same as the first computation result ranked third in the second sequence, so as to obtain a corresponding matching degree. The others may be obtained by analogy, and details are not described herein. If at least one matching degree among the various matching degrees determined by the comparison unit 303 is 0, the functional safety protection module 30 may obtain a functional safety detection result used for representing a functional safety abnormality in the computing circuit. If all the matching degrees determined by the comparison unit 303 are 1, the functional safety protection module 30 may obtain a functional safety detection result used for representing absence of a functional safety abnormality in the computing circuit.

In an example, both the first sequence and the second sequence include 20 first computation results, and the 20 first computation results in the first sequence and the 20 first computation results in the second sequence may form 20 result pairs. The comparison unit 303 may include 20 comparators. A first comparator is configured to perform a comparison operation on two first computation results in a first result pair to obtain a signal used for representing a comparison result, and a second comparator is configured to perform a comparison operation on two first computation results in a second result pair to obtain a signal used for representing a comparison result. The others may be obtained by analogy, and details are not described herein. In this way, through the 20 comparators, 20 signals used for representing comparison results may be obtained. If the 20 signals are all high-level signals, it indicates that matching degrees determined by the comparison unit 303 are all 1. If at least one of the 20 signals is a low-level signal, it indicates that at least one of the matching degrees determined by the comparison unit 303 is 0.

In this embodiment of this disclosure, the determining unit 301 may obtain the first sequence and the second sequence based on the first computation results respectively corresponding to the compute units 201, and the comparison unit 303 may compare the first computation results with the consistent corresponding ordinal positions in the first sequence and the second sequence to determine the corresponding matching degrees, without comparing the first computation results respectively corresponding to the compute units 201 pairwise. This is beneficial for reducing computation load required for detecting the functional safety abnormalities, thereby helping to save resources and power consumption.

In some optional examples, there may be a plurality of test data, and each piece of the test data may include tensor data and weight data. Any two the test data satisfy at least one of the following items:
the tensor data included in one piece of the test data is different from that included in another piece of the test data; and
the weight data included in one piece of the test data is different from that included in another piece of the test data.

In this embodiment of this disclosure, there are differences between any two test data. By using these test data for testing, computation logic can be flipped as much as possible, so that the computing array 20 may be tested more comprehensively, thereby ensuring accuracy and reliability of a finally obtained functional safety detection result.

An embodiment of this disclosure further provides a computation system. As shown in FIG. 9, the computation system may include:
a functional safety computing circuit that includes a multiplexer 40; and
a determining module, configured to determine a current state of a computing array 20 included in the computing circuit, and set the multiplexer 40 included in the computing circuit in a mode that is adaptable to the current state of the computing array 20.

Optionally, if the current state of the computing array 20 is an idle state, the determining module may set the multiplexer 40 in a first mode. If the current state of the computing array 20 is an operational state, the determining module may set the multiplexer 40 in a second mode.

In the embodiments of this disclosure, the computing circuit may perform computations normally. During the intermission period of normal computations, whether the computing circuit has a functional safety abnormality may be determined through testing. Therefore, the computing circuit can not only meet normal computation requirements, but also meet testing requirements.

### Exemplary electronic device

FIG. 11 is a structure schematic diagram of an electronic device according to an embodiment of this disclosure. An electronic device 1100 includes one or more processors 1110 and a memory 1120.

The processor 1110 may be a central processing unit (CPU) or another form of processing unit having a data processing capability and/or an instruction execution capability, and may control other components in the electronic device 1100 to implement desired functions.

The memory 1120 may include one or more computer program products, which may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 1110 may execute one or more of the program instructions to implement the method according to various embodiments of this disclosure that are described above and/or other desired functions.

In an example, the electronic device 1100 may further include an input device 1130 and an output device 1140. These components are connected to each other through a bus system and/or another form of connection mechanism (not shown).

The input device 1130 may further include, for example, a keyboard and a mouse.

The output device 1140 may output various information to the outside, and may include, for example, a display, a speaker, a printer, a communication network, and a remote output device connected to the communication network.

Certainly, for simplicity, FIG. 11 shows only some of components in the electronic device 1100 that are related to this disclosure, and components such as a bus and an input/output interface are omitted. In addition, according to specific application situations, the electronic device 1100 may further include any other appropriate components.

### Exemplary computer program product and computer readable storage medium

In addition to the foregoing method and device, the embodiments of this disclosure may also relate to a computer program product, which includes computer program instructions. When the instructions are run by a processor, the processor is enabled to perform the steps, of the method according to the embodiments of this disclosure, that are described in the "Exemplary method" section of this specification.

The computer program product may be program code, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium, which stores computer program instructions. When the computer program instructions are run by the processor, the processor is enabled to perform the steps, of the method according to the embodiments of this disclosure, that are described in the "Exemplary method" section of this specification.

The computer readable storage medium may be one readable medium or any combination of a plurality of readable media. The readable medium may be a readable signal medium or a readable storage medium. The readable storage medium may include, for example but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, advantages, superiorities, and effects mentioned in this disclosure are merely examples but are not for limitation, and it cannot be considered that these advantages, superiorities, and effects are necessary for each embodiment of this disclosure. Specific details described above are merely for examples and for ease of understanding, rather than limitations. The details described above do not limit that this disclosure must be implemented by using the foregoing specific details.

A person skilled in the art may make various modifications and variations to this disclosure without departing from the spirit and the scope of this application. In this way, if these modifications and variations of this application fall within the scope of the claims and equivalent technologies of the claims of this disclosure, this disclosure also intends to include these modifications and variations.

## Claims

1. A functional safety protection method for a computing circuit, wherein the computing circuit comprises a computing array (20) with a plurality of compute units, **characterized in that** the method comprises:
generating (210) test data;
invoking (220) the compute units to respectively perform computations based on the test data, to obtain first computation results respectively corresponding to the compute units;
determining (230) a matching degree between the first computation results respectively corresponding to the compute units; and
determining (240) a functional safety detection result of the computing array (20) based on the matching degree.

2. The method according to claim 1, further comprising:
determining (310) a current state of the computing array (20); and
the invoking the compute units to respectively perform computations based on the test data, to obtain first computation results respectively corresponding to the compute units comprises:
in response to that the current state of the computing array (20) is an idle state, invoking (2201) the compute units to respectively perform computations based on the test data, to obtain the first computation results respectively corresponding to the compute units.

3. The method according to claim 2, further comprising:
in response to that the current state of the computing array (20) is the idle state, setting (410) a multiplexer comprised in the computing circuit in a first mode, wherein
in the first mode, the multiplexer connects a test data generation module (10) that is configured to generate the test data and the computing array (20) in the computing circuit, so that the test data generation module (10) transmits the test data to the computing array (20), and each compute unit performs respective computations based on the test data.

4. The method according to claim 1, further comprising:
determining (510) a current state of the computing array (20);
in response to that the current state of the computing array (20) is an operational state, obtaining (520) actual to-be-computed data;
determining (530) a plurality of sub-calculation tasks based on the to-be-computed data;
invoking (540) different compute units to execute different sub-calculation tasks, to obtain a second computation result corresponding to the to-be-computed data; and
outputting (550) the second computation result to a designated module (60).

5. The method according to claim 4, further comprising:
in response to that the current state of the computing array (20) is the operational state, setting (610) a multiplexer comprised in the computing circuit in a second mode, wherein
in the second mode, the multiplexer connects a data obtaining module (50) that is configured to obtain the to-be-computed data and the computing array (20) in the computing circuit, so that the data obtaining module (50) transmits the to-be-computed data to the computing array (20), and different compute units execute different sub-computation tasks.

6. The method according to any one of claims 1 to 5, the determining a matching degree between the first computation results respectively corresponding to the compute units comprises:
determining a computation result set based on the first computation results respectively corresponding to the compute units;
determining, based on the computation result set, a first sequence that comprises at least two first computation results arranged in sequence and a second sequence that comprises at least two other first computation results arranged in sequence; and
determining the matching degree between the first computation results with consistent corresponding ordinal positions in the first sequence and the second sequence.

7. The method according to any one of claims 1 to 5, wherein there are a plurality of the test data, each piece of the test data comprises tensor data and weight data, and any two the test data satisfy at least one of the following items:
the tensor data comprised in one piece of the test data is different from that comprised in another piece of the test data; and
the weight data comprised in one piece of the test data is different from that comprised in another piece of the test data.

8. A functional safety computing circuit (310), **characterized in that** the functional safety computing circuit (310) comprises:
a test data generation module (10), configured to generate test data;
a computing array (20) with a plurality of compute units, wherein the compute units are configured to perform computations based on the test data to obtain first computation results respectively corresponding to the compute units; and
a functional safety protection module (30), configured to determine a matching degree between the first computation results respectively corresponding to the compute units, and determine a functional safety detection result of the computing array (20) based on the matching degree.

9. The computing circuit according to claim 8, further comprising:
a multiplexer (40), which is set in a first mode in response to that a current state of the computing array (20) is an idle state, wherein in the first mode, the multiplexer (40) connects the test data generation module (10) and the computing array (20); and
the computing array (20) is further configured to obtain the test data from the test data generation module (10), and each compute unit in the computing array (20) performs respective computations based on the test data.

10. The computing circuit according to claim 8, further comprising:
a data obtaining module (50), configured to obtain actual to-be-computed data in response to that the current state of the computing array (20) is an operational state, wherein
the computing array (20) is further configured to determine a plurality of sub-computation tasks based on the to-be-computed data, and invoke different compute units to execute different sub-computation tasks, to obtain a second computation result corresponding to the to-be-computed data; and
a data output module (55), configured to output the second computation result to a designated module (60).

11. The computing circuit according to claim 10, further comprising:
a multiplexer (40), which is set in a second mode in response to that the current state of the computing array (20) is the operational state, wherein in the second mode, the multiplexer (40) connects the data obtaining module (50) and the computing array (20); and
the computing array (20) is further configured to obtain the to-be-computed data from the data obtaining module (50), and the compute units in the computing array (20) execute the different sub-computation tasks.

12. The computing circuit according to any one of claims 8 to 11, wherein the functional safety protection module (30) comprises:
a determining unit, configured to determine a computation result set based on the first computation results respectively corresponding to the compute units, and determine, based on the computation result set, a first sequence that comprises at least two first computation results arranged in sequence and a second sequence that comprises at least two other first computation results arranged in sequence; and
a comparison unit, configured to determine the matching degree between the first computation results with consistent corresponding ordinal positions in the first sequence and the second sequence.

13. A computation system, **characterized in that** the computation system comprises:
the functional safety computing circuit according to claim 9 or 11; and
a determining module, configured to determine a current state of a computing array (20) comprised in the computing circuit, and set a multiplexer (40) comprised in the computing circuit in a mode that is adaptable to the current state of the computing array (20).

14. A computer readable storage medium, **characterized in that** the storage medium stores a computer program, and the computer program is used for implementing the functional safety protection method for a computing circuit according to any one of claims 1 to 7.

15. An electronic device (1100), **characterized in that** the electronic device (1100) comprises:
a processor (1110); and
a memory (1120), configured to store processor-executable instructions, wherein
the processor (1110) is configured to read the executable instructions from the memory (1120), and execute the instructions to implement the functional safety protection method for a computing circuit according to any one of claims 1 to 7.
